# EUROPÄISCHE PATENTSCHRIFT

(11) **EP 1 127 906 B1**
(45) Veröffentlichungstag und Bekanntmachung des Hinweises auf die Patenterteilung: **09.03.2005**
(21) Anmeldenummer: 01100559.2
(22) Anmeldetag: 10.01.2001
(51) Int. Cl.: C08G 18/38, C08G 18/42, C08G 18/79, C09D 175/04

(54) **Transparente oder pigmentierte Pulverlacke mit Vernetzern aus Hydroxyalkylamiden und Uretdiongruppen enthaltenden Polyisocyanaten**
Transparent or pigmented powder coatings with hydroxyalkylamides and polyisocyanates containing uretdione groups as cross-linkers
Revêtements en poudre transparents ou pigmentés avec des hydroxyalkylamides et des polyisocyanates d'uretdione comme réticulants

(30) Priorität: 25.02.2000 DE 10008927
(43) Veröffentlichungstag der Anmeldung: 29.08.2001
(73) Patentinhaber: Degussa AG, 40474 Düsseldorf (DE)
(72) Erfinder: Wenning, Andreas, Dr., 48301 Nottuln (DE)

(56) Entgegenhaltungen:
- EP-A- 0 322 834
- US-A- 4 463 154
- US-A- 5 786 419

## Beschreibung

Die Erfindung betrifft transparente oder pigmentierte Pulverlacke mit Vernetzern aus Hydroxyalkylamiden und Uretdiongruppen enthaltenden Polyisocyanaten, die eine geringere Anfälligkeit gegen Nadelstichbildung aufweisen.

Pulverlacke auf Basis Trigylycidylisocyanurat (TGIC) und säurefunktionellen Polyestern ergeben korrosionbeständige und wetterstabile Pulverbeschichtungen. Die EP 0 536 085 beschreibt jedoch, dass zur Herstellung des TGIC in fester Form teure Verfahren oder ein relativ großer und somit ebenfalls teurer Reinigungsaufwand erforderlich sind. Zudem wird TGIC von der Europäischen Gemeinschaft als mutagen der Kategorie II ("sollte als erbgutverändernd angesehen werden") eingestuft und ist seit dem 31. Mai 1998 als giftig zu kennzeichnen.

Toxikologisch unbedenklich und zugleich auch reaktiver sind β-Hydroxyalkylamide als Vernetzer. In den Patentschriften US 4,076,917 und US 4,101,606 werden β-Hydroxyalkylamide mit Polymeren, die mindestens eine carboxyl- oder Anhydridfunktion aufweisen, insbesondere mit Polyacrylaten zu Pulverlacken kombiniert. Die Patentschrift US 4,988,767 beschreibt Pulverlacke auf Basis von Hydroxyalkylamiden und sauren Acrylatharzen. Die EP 0 322 834 beschreibt wärmehärtende Pulverlacke, die aus Säuregruppen enthaltenden Polyestern und β-Hydroxyalkylamiden zusammengesetzt sind. Diese Beschichtungen mit β-Hydroxyalkylamid-Vernetzer sind hochwetterstabil, sehr flexibel, hart und chemikalienresistent. Insbesondere bei höheren Schichtstärken führt jedoch das bei der Vernetzung freiwerdende Wasser zur Nadelstichbildung.

In der Patentschrift US 4,889,890 werden Hybrid-Pulverlacke beschrieben. Die darin enthaltenen sauren Polymere werden mit Polyepoxiden wie z. B. Polyglycidylether aromatischer Phenole gehärtet. Zur Erhöhung der Vernetzungsdichte wird ein β-Hydroxyalkylamid eingesetzt. Diese Hybrid-Pulverlacke bieten einen guten Korrosionsschutz, sind jedoch für einen Einsatz im Außenbereich aufgrund mangelnder Witterungsbeständigkeit nicht geeignet.

Thometzek et al. in 5^{th} Nürnberg Congress, Congress Papers, Volume 1, 251-273 (1999) beschreiben Pulverlacke aus einem hydroxyfunktionellem Polyesterharz, einem Hydroxyalkylamid und einem bifunktionellem Vernetzer, der neben blockierten Isocyanatgruppen Carboxylgruppen enthält. Diese Pulverlacke sind nicht zur Erzielung glänzender sondern matter Beschichtungen geeignet.
Die Aufgabe der vorliegenden Erfindung war es Pulverlacke bereitzustellen, die hochglänzende, flexible, licht- und wetterstabile Beschichtungen mit geringer Störanfälligkeit gegen Nadelstichbildung ergeben.

Überraschenderweise wurde gefunden, daß Beschichtungen aus sauren Polymeren und β-Hydroxyalkylamid-Vernetzern, insbesondere bei größeren Schichtdicken, deutlich weniger anfällig gegen Nadelstichbildung sind, wenn als zusätzliche Komponente Uretdiongruppen enthaltende Polyisocyanat-Vernetzer zugegeben werden. Flexibilität, Glanz, Reaktivität und Wetterbeständigkeit bleiben auf dem bekannt hohen Niveau von Polyester/Hydroxyalkylamid- oder Polyurethan-Pulverlacken.

Gegenstand der vorliegenden Erfindung sind transparente oder pigmentierte Pulverlacke mit Vernetzern aus Hydroxyalkylamiden und Uretdiongruppen enthaltenden Polyisocyanaten, im wesentlichen enthaltend:
A) 20 bis 99 Gew.-% mindestens eines sauren Polymers;
B) 1 bis 25 Gew.-% mindestens eines β-Hydroxyalkylamids;
C) 0,05 bis 10 Gew.- % mindestens eines Uretdiongruppen enthaltenden nicht aromatischen Polyisocyanates mit einer NCO-Funktionalität ≥ 1;
D)0 bis 50 Gew.- % mindestens eines Pigmentes und/oder anorganischen Füllstoffes;
E) 0 bis 5 Gew.-% mindestens eines Zuschlag- oder Hilfsstoffes.

Als saures Polymer A) für die erfingungsgemäßen Pulverlacke kommen Polyester- und Acrylatharze in Betracht.

Die sauren Polyester besitzen eine Glasübergangstemperatur (Tg) im Bereich von 30 bis 85 °C und eine Säurezahl von 20 bis 80 mg KOH/g. Sie werden prinzipiell durch eine Kondensationsreaktion aliphatischer Polyole und/oder cycloaliphatischer Polyole mit aliphatischen und/oder aromatischen Polycarbonsäuren und Anhydriden hergestellt. Derartige Polyester werden beispielsweise in der EP 0 322 807, DE 198 50 970 oder WO 95/01406 beschrieben.

Die sauren Acrylatharze besitzen eine Säurezahl im Bereich von 10 bis 250 mg KOH/g und einen Schmelzpunkt von 60 bis 160 °C. Sie werden prinzipiell hergestellt durch Copolymerisation eines Monomerengemisches, bestehend aus,
a) 0 bis 70 Gew.-Teilen Methyl(methacrylat),
b) 0 bis 60 Gew.-Teilen (Cyclo)Alkylestern der Acryl- und/oder Methacrylsäure mit 2 bis 18 Kohlenstoffatomen im Alkyl- bzw. im Cycloalkylrest,
c) 0 bis 90 Gew.-Teilen Vinylaromaten und
d) 0 bis 60 Gew.-Teilen olefinisch ungesättigten Carbonsäuren,
wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(methyl)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat.

Als Monomere c) kommen z. B. Styrol, Vinyltoluol und Ethylstyrol in Betracht. Beispiele für d) sind Acryl- und Methacrylsäure, die auch bevorzugt eingesetzt werden, wie auch Crotonsäure, Itaconsäure, Fumarsäure, Maleinsäure und Citaconsäure.

Die Herstellung der Copolymerisate kann durch Copolymerisation der beispielhaft genannten Monomere a) bis d) nach üblichen radikalischen Polymerisationsverfahren erfolgen, wie beispielsweise Lösungs-, Emulsions-, Perl- oder Substanzpolymerisation.

Dabei werden die Monomeren bei Temperaturen von 60 bis 160 °C, vorzugsweise 80 bis 150 °C, in Gegenwart von Radikalbildnern und gegebenenfalls Molekulargewichtsreglern copolymerisiert.

Die Herstellung der carboxylfunktionellen Acrylat-Copolymerisate erfolgt in inerten Lösemitteln. Geeignete Lösemittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon, oder beliebige Gemische derartiger Lösemittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahe einheitliche Copolymere können auch hergestellt werden, indem man die Reaktionsmischung mit konstanter Geschwindigkeit in einen Rührkessel einlaufen lässt, ohne das Polymerisat abzuführen.

Man kann auch einen Teil der Monomeren beispielhaft in Lösemitteln der genannten Art vorlegen und die restlichen Monomeren und Hilfsmittel getrennt oder gemeinsam in diese Vorlage bei der Reaktionstemperatur eintragen. Im Allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z. B. aliphatische Azoverbindungen, wie Azodiisobuttersäurenitrit, Azo-bis-2-methylvaleronitril, 1,1'-Azo-bis-1-cyclohexannitril und 2,2'-Azo-bis-isobuttersäurealkylester; symmetrische Diacylperoxide, wie z. B. Acetyl-, Propionyl- oder Butyrylperoxid, mit Brom, Nitro-, Methyl- oder Methoxygruppen substituierte Benzoylperoxide, Laurylperoxide; symmetrische Peroxydicarbonate, z. B. tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid oder Di-tert.-butylperoxid. Zur Regelung des Molekulargewichts der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozess zugeführt werden, bei dem das Lösemittel beispielsweise in einem Ausdampfextruder oder Sprühtrockner bei ca. 120 bis 160 °C und einem Vakuum von 100 bis 300 mbar entfernt und die erfindungsgemäß zu verwendenden Copolymerisate gewonnen werden.

Derartige Polyacrylate werden beispielsweise in US 4,988,767 beschrieben.
Als Polycarboxylverbindungen können selbstverständlich auch Gemische mehrerer Stoffe eingesetzt werden.

Die β-Hydroxyalkylamide B) sind prinzipiell bekannt und z. B. in EP 0 957 082, US 4,076,917, US 4,101,606 beschrieben. Die Struktur kann folgendermaßen beschrieben werden: 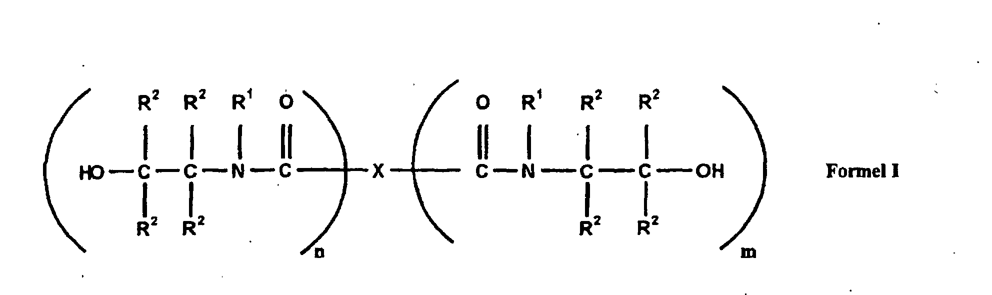 wobei die Substituenten die folgenden Bedeutungen aufweisen:
- X:: chemische Bindung, Wasserstoff oder eine einwertige oder mehrwertige organische Gruppe, abgeleitet aus gesättigten, ungesättigten oder aromatischen Kohlenwasserstoffgruppen, mit 1-24 Kohlenstoffatomen oder diese heteroatomsubstituierten Reste;
- R¹:: Wasserstoff, Alkyl-, Alkenyl-, Aryl- oder Aralkylrest mit 1-24 Kohlenstoffatomen, diese heteroatomsubstituierten Reste oder

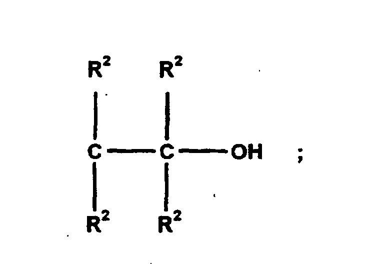

- R²:: unabhängig voneinander gleiche oder verschiedene Reste, ausgewählt aus Wasserstoff, Alkyl-, Aryl-, Aralkyl- oder Alkenylrest mit 1-24 Kohlenstoffatomen oder diese heteroatomsubstituierten Reste;
- n:: ganze Zahl von 1-10;
- m:: ganze Zahl von 0-2;
- n + m:: ≥ 2.

Bevorzugte Verbindungen, die zur Herstellung der erfindungsgemäßen Pulverlacke eingesetzt werden, werden gemäß der EP 0 957 082 hergestellt und auf der Seite 4 der A2-Schrift genannt [0026].

Das Mischungsverhältnis der carboxylgruppenhaltigen Polymere A) und der β-Hydroxyalkylamid-Verbindung B) wird in der Regel so gewählt, dass das Verhältnis Carboxylgruppen zu Hydroxylgruppen 0,6 : 1 bis 1,6 : 1 beträgt.

Die Uretdiongruppen enthaltenden nicht aromatische Polyisocyanate C) mit einer NCO-Funktionalität >1 sind prinzipiell bekannt. Sie werden z. B. in DE 30 30 539, 44 06 444, DE 195 47 878, DE 196 33 218 und EP 0 639 598 beschrieben.

Das Polyisocyanat C) besteht aus Uretdionen aliphatischer, (cyclo)aliphatischer oder cycloaliphatischer Diisocyanate. Bevorzugte Uretdione stammen aus den Diisocyanaten Isophorondiisocyanat (IPDI), Hexamethylendiisocyanat(HDI), 2-Methylpentyldiisocyanat (MPDI) oder 2,2,4 (2,4,4)-Trimethylhexamethylendiisocyanat (TMDI), wobei diese allein oder in Mischungen eingesetzt werden können. Im allgemeinen ist die Komponente C) mit 0,05 bis 10 Gew.-%, bevorzugt 0,05 bis 7 Gew.-%, in den erfindungsgemäßen Pulverlacken enthalten.

Zur Kettenverlängerung geeignete Polyole werden z. B. in DE 19 57 483, 21 05 777, 25 42 191 und 27 38 270 beschrieben. Bevorzugt sind Ethylenglykole, Butandiol-1,4, Pentandiol,-1,5, Hexandiol-1,6, 3-Methylpentandiol-1,5, 2,2,4 (2,4,4)-Trimethylhexandiol, Hydroxypivalinsäureneopentylglykolester oder Trimethylolpropan. Auch lineare oder verzweigte hydroxylgruppenhaltige Polyester oder Polycaprolactone sind als Kettenverlängerer einsetzbar.

Das Polyisocyanat C) kann terminal entweder freie oder irreversibel blockierte NCO-Gruppen oder Hydroxylgruppen tragen. Zu den zur irreversiblen Blockierung der Polyisocyanate prinzipiell einsetzbaren Verbindungen zählen z. B. einwertige Alkohole wie Ethanol, n- Butanol oder 2-Ethylhexanol und primäre oder sekundäre Monoamine wie z. B. n-Propylamin, n-Butylamin, n- Hexylamin, Dibutylamin oder Dicyclohexylamin.

Das Mischungsverhältnis der β-Hydroxyalkylamid-Verbindung B) und des Uretdiongruppen enthaltenden nicht aromatischen Polyisocyanates C) wird in der Regel so gewählt, dass das Verhältnis Hydroxylgruppen zu Isocyanatgruppen 0,5 : 1 bis 2,0 : 1 beträgt.

Zur Herstellung der gebrauchsfertigen Pulverlacke werden das saure Polymer A), das β-Hydroxyalkylamid B), das Uretdiongruppen enthaltende nicht aromatische Polyisocyanat C), gegebenenfalls mit Pigmenten oder Füllstoffen D) wie z. B. TiO₂ oder Bariumsulfat und weiteren für Pulverlacke üblichen Zuschlag- oder Hilfsstoffen E) wie z. B. Verlaufsmittel wie z. B. Polybutylacrylat oder Entgasungsmittel wie Benzoin oder Katalysatoren wie z. B. Dibutylzinndilaurat (DBTL) oder C₁-C₁₈ Zink-, Aluminium- oder Titan-Carboxylat-Salzen oder Aluminium- oder Zinkoxiden gemischt. Alle Inhaltsstoffes des Pulverlackes werden in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches oder tribostatisches Pulversprühen, Wirbelsintern, elektrostatisches Wirbelsintern, erfolgen. Nach dem Pulverauftrag werden die beschichteten Werkstücke zur Aushärtung 60 bis 5 Minuten auf eine Temperatur von 140 bis 220 °C erhitzt.

Die Pulverlacke auf Basis von sauren Polymeren und β-Hydroxyalkylamiden, die Stand der Technik sind, haben den Nachteil, daß sie, insbesondere bei höheren Schichtdicken, gegen Nadelstichbildung anfällig sind.

Überraschenderweise ergab die geringe Zugabe von Polyisocyanat-Vernetzern, die Uretdiongruppen enthalten, eine bessere Resistenz der Beschichtung gegenüber dieser Art von Oberflächenstörungen. Damit ist eine größere Prozesssicherheit beim Beschichten erzielbar. Gleichzeitig können die bekannten Vorteile einer Polyurethanvernetzung wie z. B. exzellente Haftung, Flexibilität und Licht- und Wetterstabilität genutzt werden.
Nachfolgend wird der Gegenstand der Erfindung anhand von Beispielen erläutert.

### Beispiele

### 1. Eingesetzte Rohstoffe

### 1.1 Saures Polymer A)

Als saures Polymer wurde der Polyester GRILESTA® P 7617 (Säurezahl 35 mg KOH/g, EMS-Inventa AG) eingesetzt.

### 1.2 β-Hydroxyalkylamid B)

Als β-Hydroxyalkylamid B) wurde das VESTAGON® EP-HA 320 (OH-Zahl 668 mg KOH/g, Degussa-Hüls AG) eingesetzt.

### 1.3 Blockiertes Polyisocyanat C)

Als Polyisocyanate C) wurden Cl) VESTAGON® BF 1540 (Uretdiongruppen enthaltendes Polyisocyanataddukt, NCO- Zahl 15,9 %, Degussa-Hüls AG) und C2) VESTAGON® EP-BF 1310 (Uretdiongruppen enthaltendes Polyisocyanataddukt, NCO-Zahl 13,3 % Degussa Hüls AG) eingesetzt.

### 2. Pulverlacke

### 2.1 Allgemeine Herstellungsvorschrift

Die zerkleinerten Produkte, d. h. saurer Polyester, β-Hydroxyalkylamid-Verbindung, Uretdiongruppen enthaltendes Polyisocyanat, Verlaufmittel, ggf Katalysatoren, werden ggf. mit dem Weißpigment in einem Kollergang innig vermischt und anschließend in einem Zweischneckenextruder der Fa. Berstorff bis maximal 140 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 140 und 220 °C eingebrannt. Die Abkürzungen in den folgenden Tabellen bedeuten:

| | |
|---|---|
| SD = | Schichtdicke in µm |
| ET = | Tiefung nach Erichsen (DIN 53 156) |
| GS = | Gitterschnittprüfung (DIN53151) |
| GG 60° -Winkel = | Messung des Glanzes n. Gardner (ASTM-D 5233) |
| Imp rev. = | Impact reverse inch•lb |

### 2.2 Lacktechnische Prüfung

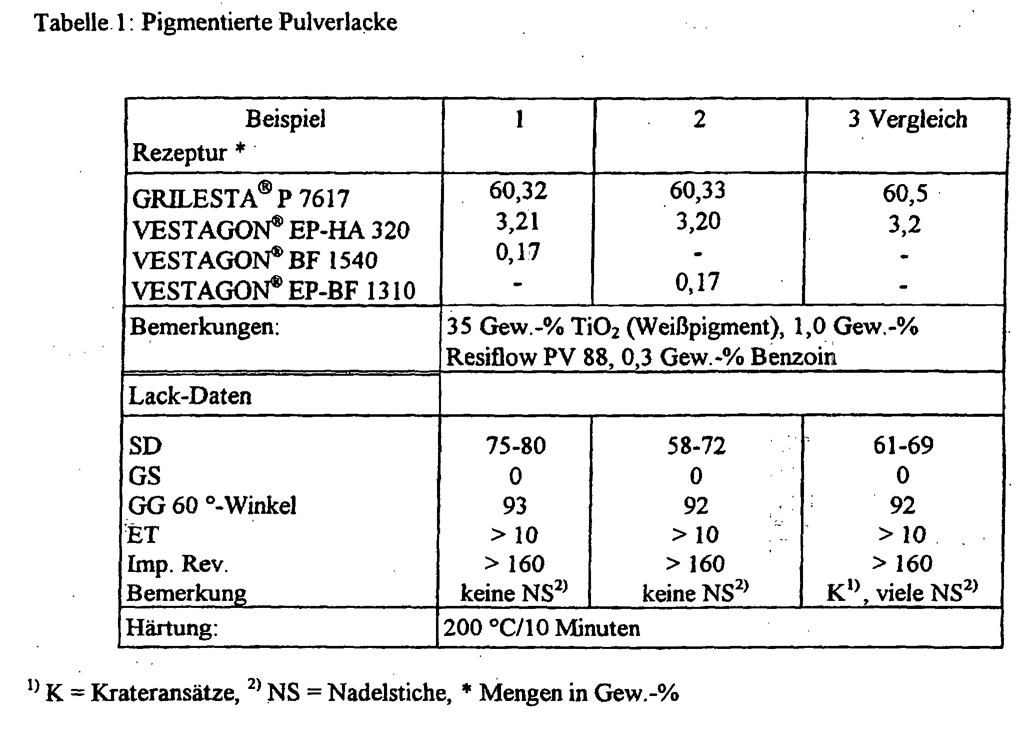

## Patentansprüche

1. Transparente oder pigmentierte Pulverlacke mit Vernetzern aus Hydroxyalkylamiden und Uretdiongruppen enthaltenden Polyisocyanaten, im wesentlichen enthaltend:
A) 20 bis 99 Gew.-% mindestens eines sauren Polymers;
B) 1 bis 25 Gew.-% mindestens eines β-Hydroxyalkylamids;
C) 0,05 bis 10 Gew.- % mindestens eines Uretdiongruppen enthaltenden nicht aromatischen Polyisocyanates mit einer NCO-Funktionalität ≥ 1;
D) 0 bis 50 Gew.- % mindestens eines Pigmentes und/oder anorganischen Füllstoffes;
E) 0 bis 5 Gew.-% mindestens eines Zuschlag- oder Hilfsstoffes.

2. Transparente oder pigmentierte Pulverlacke gemäß Anspruch 1,
**dadurch gekennzeichnet,**
**dass** das saure Polymer A) ein Polyesterharz mit einer Glasübergangstemperatur im Bereich von 30 bis 85 °C und einer Säurezahl von 20 bis 80 mg KOH/g ist.

3. Transparente oder pigmentierte Pulverlacke gemäß Anspruch 1,
**dadurch gekennzeichnet,**
**dass** das saure Polymer A) ein Acrylatharz mit einer Säurezahl im Bereich von 10 bis 250 mg KOH/g und einen Schmelzpunkt von 60 bis 160 °C ist.

4. Transparente oder pigmentierte Pulverlacke gemäß Anspruch 1,
**dadurch gekennzeichnet,**
**dass** als saures Polymer A) eine beliebige Mischung aus mindestens einem Polyesterharz und mindestens einem Acrylatharz enthalten ist.

5. Transparente oder pigmentierte Pulverlacke nach mindestens einem der Ansprüche 1 bis 4,
**dadurch gekennzeichnet,**
**dass** das β-Hydroxyalkylamid B) die folgende Formel I aufweist 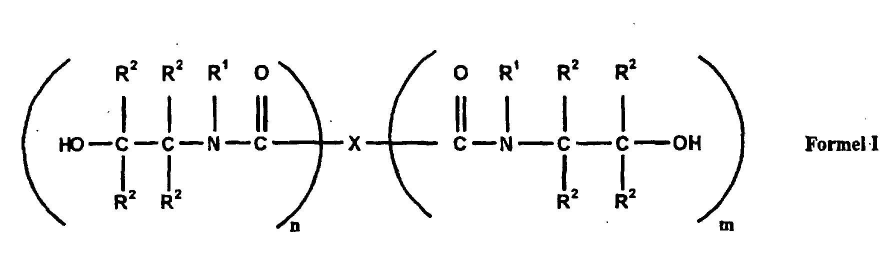 wobei die Substituenten die folgenden Bedeutungen haben:
X chemische Bindung, Wasserstoff oder eine einwertige oder mehrwertige organische Gruppe, abgeleitet aus gesättigten, ungesättigten oder aromatischen Kohlenwasserstoffgruppen, mit 1-24 Kohlenstoffatomen oder diese heteroatomsubstituierten Reste;
R¹: Wasserstoff, Alkyl-, Alkenyl-, Aryl- oder Aralkylrest mit 1-24 Kohlenstoffatomen, diese heteroatomsubstituierten Reste oder 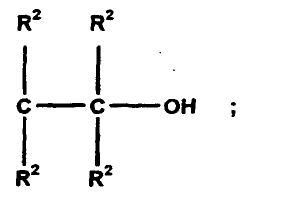
R²: unabhängig voneinander gleiche oder verschiedene Reste, ausgewählt aus Wasserstoff, Alkyl-, Aryl-, Aralkyl- oder Alkenylrest mit 1-24 Kohlenstoffatomen oder diese heteroatomsubstituierten Reste;
n: ganze Zahl von 1-10;
m: ganze Zahl von 0-2;
n+m: ≥ 2.

6. Transparente oder pigmentierte Pulverlacke nach mindestens einem der Ansprüche 1 bis 5,
**dadurch gekennzeichnet,**
**dass** das Uretdiongruppen enthaltende nicht aromatische Polyisocyanat C) ausgewählt wird aus Uretdionen aliphatischer, (cyclo)aliphatischer und/oder cycloaliphatischer Diisocyanate.

7. Transparente oder pigmentierte Pulverlacke gemäß Anspruch 6,
**dadurch gekennzeichnet,**
**dass** das Uretdiongruppen enthaltende nicht aromatische Polyisocyanat C) ausgewählt wird aus Uretdionen der Diisocyanate Isophorondiisocyanat, Hexamethylendiisocyanat, 2-Methylpentyldiisocyanat und/oder 2,2,4 (2,4,4)-Trimethylhexamethylendiisocyanat.

8. Transparente oder pigmentierte Pulverlacke gemäß den Ansprüchen 6 bis 7,
**dadurch gekennzeichnet,**
**dass** das Uretdiongruppen enthaltende nichtaromatische Polyisocyanat C) Polyole als Kettenverlängerer enthält.

9. Transparente oder pigmentierte Pulverlacke gemäß Anspruch 8,
**dadurch gekennzeichnet,**
**dass** als Kettenverlängerer Ethylenglykol, Butandiol-1,4, Pentandiol,-1,5, Hexandiol-1,6, 3-Methylpentandiol-1,5, 2,2,4 (2,4,4)-Trimethylhexandiol, Hydroxypivalinsäureneopentylglykolester, Trimethylolpropan, lineare oder verzweigte hydroxylgruppenhaltige Polyester und/oder Polycaprolactone eingesetzt werden.

10. Transparente oder pigmentierte Pulverlacke gemäß den Ansprüchen 6 bis 9,
**dadurch gekennzeichnet,**
**dass** das Polyisocyanat C) terminal freie oder irreversibel blockierte NCO-Gruppen oder Hydroxylgruppen trägt.

11. Transparente oder pigmentierte Pulverlacke gemäß den Ansprüchen 6 bis 10,
**dadurch gekennzeichnet,**
**dass** einwertige Alkohole oder primäre oder sekundäre Monoamine als irreversible Blockierungsmittel eingesetzt werden.

12. Transparente oder pigmentierte Pulverlacke gemäß Anspruch 11,
**dadurch gekennzeichnet,**
**dass** zur irreversiblen Blockierung der Polyisocyanate Ethanol, n- Butanol, 2-Ethylhexanol, n-Propylamin, n-Butylamin, n- Hexylamin, Dibutylamin oder Dicyclohexylamin eingesetzt werden.

13. Transparente oder pigmentierte Pulverlacke nach mindestens einem der Ansprüche 1 bis 12,
**dadurch gekennzeichnet,**
**dass** als Hilfs- und Zuschlagstoffe Verlaufmittel, Entgasungsmittel oder Katalysatoren enthalten sind.

14. Transparente oder pigmentierte Pulverlacke gemäß Anspruch 13,
**dadurch gekennzeichnet,**
**dass** in den Pulverlacken Katalysatoren in einer Konzentration von 0,03 bis 1,0 Gew.-%, bezogen auf die gesamte Pulverlackmenge, enthalten sind.

15. Transparente oder pigmentierte Pulverlacke gemäß Anspruch 14,
**dadurch gekennzeichnet,**
**dass** als Katalysatoren Aluminium-Carboxylat-Salze, Titan-Carboxylat-Salze, Aluminiumoxide, Zinkoxide und/oder organische Zinnverbindungen enthalten sind.

16. Transparente oder pigmentierte Pulverlacke nach mindestens einem der Ansprüche 1 bis 15,
**dadurch gekennzeichnet,**
**dass** das Mischungsverhältnis der sauren Polymere A) und der β-Hydroxyalkylamid-Verbindung B) so gewählt wird, dass das Verhältnis Carboxylgruppen zu Hydroxylgruppen 0,6 : 1 bis 1,6 : 1 beträgt.

17. Transparente oder pigmentierte Pulverlacke nach mindestens einem der Ansprüche 1 bis 16,
**dadurch gekennzeichnet,**
**dass** das Mischungsverhältnis der β-Hydrocyalkylamid-Verbindung B) und des Uretdiongruppen enthaltenden nicht aromatischen Polyisocyanates C) so gewählt wird, dass das Verhältnis Hydroxylgruppen zu Isocyanatgruppen 0,5 : 1 bis 2,0 : 1 beträgt.

## Claims

1. A transparent or pigmented powder coating material with crosslinkers comprising hydroxyalkylamides and polyisocyanates containing uretdione groups, essentially comprising:
A) from 20 to 99% by weight of at least one acidic polymer;
B) from 1 to 25% by weight of at least one β-hydroxyalkylamide;
C) from 0.05 to 10% by weight of at least one nonaromatic polyisocyanate which contains uretdione groups and has an NCO functionality ≥ 1;
D) from 0 to 50% by weight of at least one pigment and/or inorganic filler;
E) from 0 to 5% by weight of at least one adjuvant or auxiliary.

2. A transparent or pigmented powder coating material according to claim 1, **characterized in that** the acidic polymer A) is a polyester resin having a glass transition temperature in the range from 30 to 85°C and an acid number of from 20 to 80 mg KOH/g.

3. A transparent or pigmented powder coating material according to claim 1, **characterized in that** the acidic polymer A) is an acrylate resin having an acid number in the range from 10 to 250 mg KOH/g and a melting point of from 60 to 160°C.

4. A transparent or pigmented powder coating material according to claim 1, **characterized in that** the acidic polymer A) is any desired mixture of at least one polyester resin and at least one acrylate resin.

5. A transparent or pigmented powder coating material according to one of claims 1 to 4, **characterized in that** the β-hydroxyalkylamide B) has the formula I 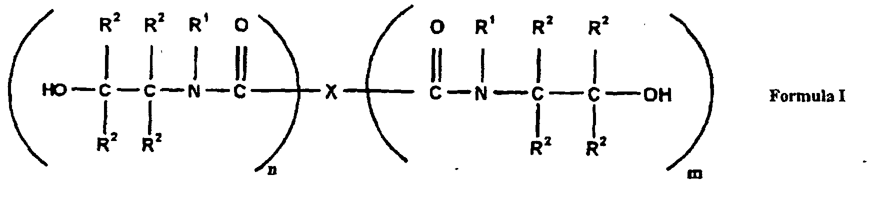 where
X is a chemical bond, hydrogen or a monovalent or polyvalent organic group derived from saturated, unsaturated or aromatic hydrocarbon groups and having 1-24 carbon atoms, or these radicals heteroatom-substituted;
R¹ is hydrogen, an alkyl, alkenyl, aryl or aralkyl radical having 1-24 carbon atoms, these radicals heteroatom-substituted, or 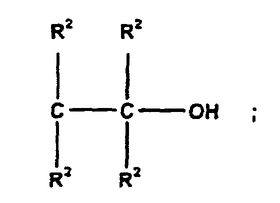
R² radicals independently of one another are identical or different and selected from hydrogen, an alkyl, aryl, aralkyl or alkenyl radical having 1-24 carbon atoms, or these radicals heteroatom-substituted;
n is an integer from 1 to 10;
m is an integer from 0 to 2; and
n+m is ≥ 2.

6. A transparent or pigmented powder coating material according to at least one of claims 1 to 5, **characterized in that** the nonaromatic polyisocyanate containing uretdione groups, C), is selected from uretdiones of aliphatic, (cyclo)-aliphatic and/or cycloaliphatic diisocyanates.

7. A transparent or pigmented powder coating material according to claim 6, **characterized in that** the nonaromatic polyisocyanate containing uretdione groups, C), is selected from uretdiones of the diisocyanates isophorone diisocyanate, hexamethylene diisocyanate, 2-methylpentyl diisocyanate and/or 2,2,4(2,4,4)-trimethylhexamethylene diisocyanate.

8. A transparent or pigmented powder coating material according to either of claims 6 and 7, **characterized in that** the nonaromatic polyisocyanate containing uretdione groups, C), comprises polyols as chain extenders.

9. A transparent or pigmented powder coating material according to claim 8, **characterized in that** ethylene glycol, 1,4-butanediol, 1,5-pentanediol, 1,6-hexanediol, 3-methyl-1,5-pentanediol, 2,2,4(2,4,4)-trimethylhexanediol, neopentyl glycol hydroxypivalate, trimethylolpropane, linear or branched, hydroxyl-containing polyesters and/or polycaprolactones are used as chain extenders.

10. A transparent or pigmented powder coating material according to any of claims 6 to 9, **characterized in that** the polyisocyanate C) carries, terminally, free or irreversibly blocked NCO groups or hydroxyl groups.

11. A transparent or pigmented powder coating material according to any of claims 6 to 10, **characterized in that** monohydric alcohols or primary or secondary monoamines are used as irreversible blocking agents.

12. A transparent or pigmented powder coating material according to claim 11, **characterized in that** the polyisocyanates are blocked irreversibly using ethanol, n-butanol, 2-ethylhexanol, n-propylamine, n-butylamine, n-hexylamine, dibutylamine or dicyclohexylamine.

13. A transparent or pigmented powder coating material according to at least any one of claims 1 to 12, **characterized in that** auxiliaries and adjuvants present are levelling agents, devolatilizers or catalysts.

14. A transparent or pigmented powder coating material according to claim 13, **characterized in that** catalysts in a concentration of from 0.03 to 1.0% by weight, based on the total amount of powder coating material, are present in the powder coating material.

15. A transparent or pigmented powder coating material according to claim 14, **characterized in that** the catalysts comprise aluminium carboxylate salts, titanium carboxylate salts, aluminium oxides, zinc oxides and/or organotin compounds.

16. A transparent or pigmented powder coating material according to at least one of claims 1 to 15, **characterized in that** the ratio of the acidic polymers A) to the β-hydroxyalkylamide compound B) is chosen such that the ratio of carboxyl groups to hydroxyl groups is from 0.6:1 to 1.6:1.

17. A transparent or pigmented powder coating material according to any one of claims 1 to 16, wherein the ratio of the β-hydroxyalkylamide compound B) to the nonaromatic polyisocyanate containing uretdione groups, C), is chosen such that the ratio of hydroxyl groups to isocyanate groups is from 0.5:1 to 2.0:1.

## Revendications

1. Revêtements en poudre transparents ou pigmentés, contenant des agents de réticulation constitués d'hydroxyalkylamides et de polyisocyanates contenant des groupes uretdione, comportant essentiellement :
A) 20 à 99 % en poids d'au moins un polymère acide ;
B) de 1 à 25 % en poids d'au moins un β-hydroxyalkylamide ;
C) 0,05 à 10 % en poids d'au moins un polyisocyanate non aromatique contenant des groupes uretdione, d'une fonctionnalité NCO > 1 ;
D) 0 à 50 % en poids d'au moins un pigment et/ou une charge inorganique ;
E) 0 à 5 % en poids d'au moins un additif ou adjuvant.

2. Revêtements en poudre transparents ou pigmentés selon la revendication 1,
**caractérisés en ce que**
le polymère acide A) est une résine de polyester d'une température de transition vitreuse dans la plage de 30 à 85°C et d'un indice d'acide de 20 à 80 mgKOH/g.

3. Revêtements en poudre transparents ou pigmentés selon la revendication 1,
**caractérisés en ce que**
le polymère acide A) est une résine acrylate d'un indice d'acide dans la plage de 10 à 250 mgKOH/g, et d'un point de fusion de 60 à 160°C.

4. Revêtements en poudres transparents ou pigmentés selon la revendication 1,
**caractérisés en ce que**
comme polymère acide A), ils contiennent un mélange quelconque d'au moins une résine de polyester et au moins une résine acrylate.

5. Revêtements en poudre transparents ou pigmentés selon au moins une des revendications 1 à 4,
**caractérisés en ce que**
le β-hydroxyalkylamide B) possède la formule I suivante : 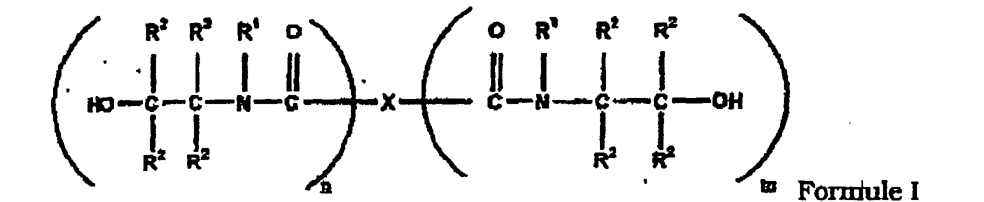 les substituants ayant les significations suivantes :
X : liaison chimique, hydrogène ou un groupe organique monovalent ou plurivalent, dérivé de groupes hydrocarbonés saturés, insaturés ou aromatiques,
comportant 1 à 24 atome(s) de carbone ou de ces restes substitués par des hétéroatomes ;
R¹ : hydrogène, reste alkyle, alcényle, aryle, ou aralkyle comportant 1 à 24 atome(s) de carbone, ces restes substitués par des hétéroatomes, ou 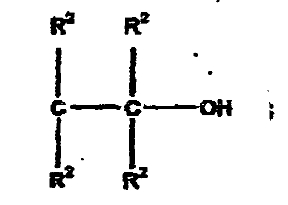
R² : restes identiques ou différents, indépendants les uns des autres, choisis parmi l'hydrogène, un reste alkyle, aryle, aralkyle ou alcényle comportant 1 à 24 atome(s) de carbone ou ces restes substitués par des hétéroatomes ;
n : nombre entier de 1 à 10 ;
m : nombre entier de 0 à 2 ;
n + m : ≥ 2.

6. Revêtements en poudre transparents ou pigmentés selon au moins une des revendications 1 à 5,
**caractérisés en ce que**
le polyisocyanate non aromatique contenant des groupes uretdione C) est choisi parmi des uretdiones diisocyanates aliphatiques, (cyclo)aliphatiques et/ou diisocyanates cycloaliphatiques.

7. Revêtements en poudre transparents ou pigmentés selon la revendication 6,
**caractérisés en ce que**
le polyisocyanate non aromatique contenant des groupes uretdione C) est choisi parmi des uretdiones diisocyanates, diisocyanate d'isophorone, diisocyanate d'hexaméthylène, diisocyanate de 2-méthylpentyle et/ou diisocyanate de 2,2,4 (2,4,4) -triméthylhexaméthylène.

8. Revêtements en poudre transparents ou pigmentés selon les revendications 6 ou 7,
**caractérisés en ce que**
le polyisocyanate non aromatique contenant des groupes uretdione C) contient des polyols comme prolongateurs de chaînes.

9. Revêtements en poudre transparents ou pigmentés selon la revendication 8,
**caractérisés en ce que**
comme prolongateurs de chaînes, on utilise l'éthylèneglycol, le butanediol-1,4, le pentanediol-1,5, l'hexanediol-1,6, le 3-méthylpentanediol-1,5, le 2,2,4 (2,4,4) triméthylhexanediol, l'ester néopentylglycolique de l'acide hydroxypivalique, le triméthylolpropane, des polyesters contenant des groupes hydroxyle linéaires ou ramifiés et/ou des polycaprolactones.

10. Revêtements en poudre transparents ou pigmentés selon les revendications 6 à 9,
**caractérisés en ce que**
le polyisocyanate C) porte des groupes NCO ou des groupes hydroxyle libres ou bloqués de manière irréversible, terminaux.

11. Revêtements en poudre transparents ou pigmentés selon les revendications 6 à 10,
**caractérisés en ce qu'**
on utilise des monoalcools ou des monoamines primaires ou secondaires comme agents de blocage irréversible.

12. Revêtements en poudre transparents ou pigmentés selon la revendication 11,
**caractérisés en ce que**
pour le blocage irréversible des polyisocyanates, on utilise l'éthanol, le n-butanol, le 2-éthylhexanol, la n-propylamine, la n-butylamine, la n-hexylamine, la dibutylamine ou la dicyclohexylamine.

13. Revêtements en poudre transparents ou pigmentés selon au moins une des revendications 1 à 12,
**caractérisés en ce que**
comme adjuvants et additifs, ils contiennent des agents d'étalement, des agents de dégazage ou des catalyseurs.

14. Revêtements en poudre transparents ou pigmentés selon la revendication 13,
**caractérisés en ce qu'**
ils contiennent des catalyseurs à une concentration de 0,03 à 1,0 % en poids, rapporté à la quantité de revêtements en poudre totale.

15. Revêtements en poudre transparents ou pigmentés selon la revendication 14,
**caractérisés en ce que**
comme catalyseurs, ils contiennent des sels de carboxylate d'aluminium, des sels de carboxylate de titane, des oxydes d'aluminium, des oxydes de zinc et/ou des composés de l'étain organiques.

16. Revêtements en poudre transparents ou pigmentés selon au moins une des revendications 1 à 15,
**caractérisés en ce que**
le rapport de mélange du polymère acide A) et du composé β-hydroxyalkylamide B) est choisi de telle sorte que le rapport des groupes carboxyle aux groupes hydroxyle soit égal à 0,6/1 à 1,6/1.

17. Revêtements en poudre transparents ou pigmentés selon au moins une des revendications 1 à 16,
**caractérisés en ce que**
le rapport de mélange du composé β-hydroxyalkylamide B) et du polyisocyanate non aromatique contenant des groupes uretdione C) est choisi de telle sorte que le rapport des groupes hydroxyle aux groupes isocyanate soit égal à 0,5/1 à 2,0 / 1.
